# EUROPÄISCHE PATENTSCHRIFT

(11) **EP 3 713 702 B1**
(45) Veröffentlichungstag und Bekanntmachung des Hinweises auf die Patenterteilung: **19.07.2023**
(21) Anmeldenummer: 18807250.8
(22) Anmeldetag: 16.11.2018
(51) Int. Cl.: B23D 21/14, B26D 3/16

(54) **ROHRSCHNEIDEMASCHINE MIT EINEM GESTEUERTEN, FLIEGENDEN SCHNEIDDORN SOWIE SCHNEIDEVERFAHREN**
TUBE CUTTING MACHINE WITH A CONTROLLED, LOOSE CUTTING SPINDLE AND CUTTING METHOD
MACHINE A DÉCOUPER DES TUBES AYANT UN MANDRIN DE COUPE LIBRE AINSI QUE PROCÉDÉ DE COUPE

(30) Priorität: 20.11.2017 DE 102017127326
(43) Veröffentlichungstag der Anmeldung: 30.09.2020
(73) Patentinhaber: Rattunde AG, 19288 Ludwigslust (DE)
(72) Erfinder: RATTUNDE, Ulrich, 19288 Ludwigslust (DE)
(74) Vertreter: Groth, Wieland
(86) Internationale Anmeldenummer: PCT/EP2018/081508
(87) Internationale Veröffentlichungsnummer: WO 2019/096969

(56) Entgegenhaltungen:
- WO-A1-2018/054706
- DE-A1- 2 430 608
- DE-A1-102010 061 191
- US-A- 4 889 023

## Beschreibung

Die Erfindung betrifft eine Rohrschneidemaschine nach dem Oberbegriff des Anspruchs 1.

Eine solche Rohrschneidemaschine ist aus DE 24 30 608 A bekannt.

Die Erfindung betrifft ebenfalls ein Verfahren nach dem Obergriff des Anspruchs 5.

Ein solches Verfahren ist aus DE 10 2010 061191 A bekannt.

Nach dem Stand der Technik sind Schneidemaschinen mit Dornhalterungen für einen Schneidexzenterantrieb mit variablem Hub bekannt.

Für Rohrscherverfahren ist es erforderlich, einen Schneiddorn im abzulängenden Rohr derart zu positionieren, dass ein Schneiddornspalt exakt in Achsrichtung des Rohres innerhalb des Schneidspaltes zweier Schneidmatrizen liegt. Im Stand der Technik ist es bekannt, den Schneiddorn durch das Rohr hindurch mit einer Stange mit einer Einstellvorrichtung zu verbinden und auf Position zu halten und für den nachfolgenen Schneidtakt vorzuschieben. Die Stange zur axialen Befestigung und die Positionierung des Schneiddorns können wahlweise von der Rohrzuführungsseite oder von der Rohrschnittseite erfolgen. Nachteilig ist jedoch, dass der Dorn im ersten Fall durch die gesamte Rohrausgangslänge durchgeschoben werden muss, bevor der Schneidvorgang beginnen kann, oder dass der Dorn, wenn er im zweiten Fall von der Abschnittsseite her befestigt ist, zur Entnahme von einem oder von mehreren abgelängten Rohrabschnitten weggefahren geöffnet werden muss. Die bekannten Rohrscherverfahren benötigen deshalb einen großen Zeitanteil für die Dornpositionierung. Die Positionierung durch das Ausgangsrohr ist zusätzlich sehr störanfällig, da die Haltestange sehr lang sein kann, z. B. sechs bis zwölf Meter. Die dadurch entstehende große temperaturabhängige Längsausdehnung und der Durchhang sind für die exakte Positionierung des Dornspaltes hinderlich. In jedem Fall ist es für das Scherverfahren zwingend erforderlich, den Dornspalt absolut exakt zu positionieren.

In der DE 10 2010 061 191 A1 ist eine Schneidemaschine mit einer feststehenden Schneidmatrize offenbart, die mit einem Dornteil über einem Bolzen positionsfest verbunden ist.

In der DE 24 30 608 ist eine Schneidvorrichtung offenbart, mit der ein Rohrabschnitt von einem Rohr abgelängt wird. Hier wird ein Dorn über eine Spule an ein Dornelement herangezogen. Das Dornelement liegt an einem Einstellring an. Der Dorn braucht nicht für einen neuen Schneidvorgang neu positioniert zu werden.

Aus der DE 2 430 608 A1 ist ein Verfahren zum Abschneiden von Werkstücken bekannt. Dabei wird ein Stützelement oder Dorn aus zwei voneinander trenn- oder teilbaren Elementen zur Verfügung gestellt, wobei das eine Element aus einem gehärteten magnetischen Material hergestellt ist, das andere Element aus einem gehärteten Material besteht. Angrenzend an das eine Element ist eine Magnetspule angeordnet.

Aus der US 4,889,023 ist eine Rohrschneidemaschine mit fliegend gelagertem Dorn bekannt, bei dem der Dorn über ein Magnetfeld positioniert wird.

Aufgabe der Erfindung ist es daher, eine Rohrschneidemaschine und ein Verfahren zum Ablängen von Rohrabschnitten zur Verfügung zu stellen, die bzw. das die oben genannten Nachteile verringern.

Die Aufgabe wird in einem ersten Aspekt durch eine eingangs genannte Rohrschneidemaschine mit den Merkmalen des Anspruchs 1 gelöst.

Zunächst ist hier unter einer Rohrschneidemaschine auch eine Rohrschermaschine zu verstehen. Unter einem Rohr ist vorzugsweise ein im Querschnitt einen kreisförmigen Außenumfang und im Querschnitt einen kreisförmigen Innenumfang aufweisendes Längsprofil zu verstehen, das hier vorzugsweise para- oder diamagnetisch ist.

Die Rohrschneidemaschine umfasst hier das bereits eingefädelte Rohr, von dem ein Rohrabschnitt abgelängt werden soll, und eine Matrizenschneide mit einer feststehenden Schneidmatrize und einer gegenüber der feststehenden Schneidmatrize beweglichen Schneidmatrize sowie einen Schneiddorn, der in das Rohr eingebracht ist, der einen stationären Dorn und einen dem stationären Dorn gegenüber beweglichen Dorn aufweist.

Der Schneiddorn ist während des Schneidvorganges im Inneren des Rohres angeordnet. Dabei ist ein Dornspalt, also ein Abstand zwischen einem flächigen Ende des stationären Dornes und einem flächigen Ende des beweglichen Dornes, kleiner als der radial verlängerte Matrizenspalt und entlang des gesamten Umfanges der Rohres innerhalb des radial verlängerten Matrizenspaltes, also des Abstandes zwischen der positionsfesten und der beweglichen Schneidmatrize, angeordnet. Die Schneidmatrize wird vorzugsweise mit einem Exzenterantrieb in einer exzentrischen Bewegung gegenüber der feststehenden Schneidmatrize angetrieben, das ist eine spiralförmig größer werdende Bewegung, also eine Bewegung mit variablem Hub. Durch diese exzentrische Bewegung kann der Rohrabschnitt vom Rohr abgetrennt werden.

Vorzugsweise ist die bewegliche Schneidmatrize mit dem Exzenterantrieb verbunden; darüber hinaus ist eine Vorschubvorrichtung, beispielsweise in Form eines beweglichen Greifers, vorgesehen, der das Rohr in der Rohrschneidemaschine um die gewünschte Ablänglänge exakt vorschiebt. Das Rohr wird während der getakteten Schneidvoränge schrittweise vorgeschoben.

Erfindungsgemäß ist ein gesteuerter, fliegender Schneiddorn im Rohr angeordnet, und es ist eine Magnetkupplung vorgesehen mit einem außerhalb des Rohres angeordneten Kupplungsstator und einem am stationären Dorn angeordneten Kupplungsläufer, der mit dem Kupplungsstator zusammenwirkt. Die Magnetkupplung bildet ein Magnetfeld zwischen Kupplungsläufer und Kupplungsstator aus. Eine Verschiebung des Magnetfeldes in Längsrichtung ist durch Steuerwerte steuerbar ist. Die Verschiebung des Magnetfeldes kann auf verschiedene Arten bewirkt werden.

Des Weiteren ist ein Lagesensor mit einem am Gestell der Rohrschneidemaschine positionsfest verbundenen Sensorstator und einem mit dem stationären Dorn positionsfest verbundenen Sensorläufer vorgesehen, mit der axiale Abweichungen des Schneiddornes aus der Schneidstellung messbar sind, und es ist eine Steuereinheit vorgesehen, die Abweichungsmesswerte, die der Lagesensor ermittelt, in die Steuerwerte umwandelt. Die Steuerwerte werden der Steuereinheit zugeführt, durch die der Schneiddorn in die Schneidstellung zurückbewegbar ist.

Die Erfindung macht von der Idee Gebrauch, den Schneiddorn nicht mehr durch eine Stange die durch das eine oder das andere Rohrende geführt ist zu positionieren, sondern auf diese mechanische Verbindung vollständig zu verzichten und statt dessen die Magnetkupplung vorzusehen, die den fliegenden Schneiddorn auf Position hält, und dazu einen Lagesensor vorzusehen, der bei Verstellung der Magnetkupplung dies als Änderung misst und über die Steuereinheit korrigiert.

Die Magnetkupplung weist im außen um das Rohr angeordneten Kupplungsstator vorzugsweise eine Reihe von ringförmigen Permanentmagneten auf, während der Kupplungsläufer, der Teil des fliegenden Schneiddornes ist, ebenfalls eine Reihe von vorzugsweise ringförmigen Permanentmagneten aufweist, die mit entgegengesetzten Polen zu den zugeordneten Magneten des Kupplungsstators ausgebildet sind und so den Schneiddorn durch eine sich durch die Rohrwandung hindurch ausbildende magnetische Kraft auf eine Schneidposition ziehen. Die Magneten vorzugsweise Ringmagneten der Magnetkupplung als auch des Lagesensors können auch als elektrische Magneten ausgebildet sein. Es sind dann entsprechende elektrische Anschlüsse für die Spulen vorzusehen. Es können auch die Magneten des fliegenden Schneiddornes als Permanentmagneten und die äußere Magneten der Sensorstators und Kupplungsstators als elektrische Magneten ausgebildet sein, von und zu denen leicht elektrische Leitungen verlegt werden können.

Die Magnetkupplung ist in axialer Richtung verstellbar, beispielweise dadurch, dass bei der Ausbildung durch Permanentmagnete das gesamte Gehäuse des Kupplungsstators in axialer Richtung verschiebbar ist. Bei Ausbildung der Magneten durch elektrische Magneten können Spulen so geschaltet werden, dass sich das Magnetfeld in axialer Richtung hin und her verschiebt. In beiden Fällen ist das Magnetfeld der Magnetkupplung in axialer Richtung verschiebbar, um damit den Schneiddorn in seiner Position relativ zur Matrizenschneide neu oder anfänglich einmal richtig auszurichten.

Die Verschiebung des Magnetfeldes der Magnetkupplung wird durch Steuerwerte bestimmt, die durch Messwerte des Lagesensors bestimmt werden. Der Lagesensor weist vorzugsweise einen Sensorläufer auf, der wenigstens zwei in Längsrichtung voneinander beabstandete Magnete aufweist. Der Sensorstator weist wenigstens zwei Sensorringe mit jeweils wenigstens zwei Hall-Sensoren auf. Durch die axiale Verschiebung der Magnete in axialer Längsrichtung werden sich verändernde Magnetfeldstärken durch die Hall-Sensoren gemessen. Die Messwerte werden ermittelt und vorzugsweise verarbeitet und als Steuerwerte der Magnetkupplung zugeführt.

Günstigerweise sind die Hall-Sensoren mit der Steuereinheit verbunden, die Messwerten der Hall-Sensoren eines Sensorringes jeweils einen Sensorringmesswert zuordnet und aus Veränderungen von Sensorringmesswertdifferenzen eine Abweichung des Schneiddorns aus der Schneidlage berechnet und die Abweichungsmesswerte erzeugt. Vorzugsweise können aus den Messwerten der Hall-Sensoren eines Sensorringes Durchschnittswerte, vorzugsweise gewichtete Durchschnittswerte gebildet werden und diese als Sensormesswert der Steuereinheit zugeführt werden. Jeder Sensorring führte somit zu einem Sensorringmesswert, und bei Verschiebung des Schneiddornes erzeugt jeder Sensorring durch Verschiebung der Magnete des Schneiddornes gegenüber dem Sensorstator andere Sensorringmesswerte, und aus den Sensorringmesswertdifferenzen kann die Verschiebung des Schneiddornes aus der Schneidlage berechnet werden. Entsprechende Steuerwerte werden ermittelt, und die Verschiebung des Schneiddornes wird durch entsprechendes Verschieben des Magnetfeldes der Magnetkupplung rückgängig gemacht.

Die Aufgabe wird auch durch ein Verfahren zum Ablängen von Rohrabschnitten der eingangs genannten Art mit den Merkmalen des Anspruchs 5 erfüllt.

Erfindungsgemäß wird ein fliegender Schneiddorn in das Rohr eingeführt, das Rohr in eine Matrizenschneide eingeführt, bis eine Schnittfläche zwischen Rohrabschnitt und Rohr in Verlängerung des Matrizenspaltes angeordnet wird und der fliegende Schneiddorn in seiner axialen Position ausgerichtet und in eine Schneidposition verschoben wird, in der ein Schneiddornspalt innerhalb der Verlängerung des Matrizenspaltes angeordnet wird.

Das Verfahren eignet sich insbesondere zur Durchführung mit einer der eingangs genannten Rohrschneidemaschinen. Umgekehrt eignen sich die eingangs genannten Rohrschneidemaschinen alle zur Durchführung des genannten oder der nachfolgenden Verfahren.

Ein Lagesensor misst Verschiebungen des Schneiddornes aus einer Schneidposition, der der Steuereinheit Messwerte zuführt, die die Verschiebungsmesswerte ermittelt und diese in Steuerwerte umwandelt und einer Magnetkupplung zuführt, die den Schneiddorn in seine Schneidposition zurückverschiebt.

Vorzugsweise werden Messwerte von entlang eines Messringes angeordneten Hall-Sensoren gemessen und zu einem Sensorringmesswert verrechnet, und die Sensorringmesswerte wenigstens zweier Messringe werden ermittelt und mit Sensorringmesswerten einer Schneidstellung verglichen, und aus dem Vergleich werden die Verschiebungsmesswerte berechnet. Die Verschiebungsmesswerte können dann durch die Steuereinheit in die genannten Steuermesswerte umgewandelt werden.

Günstigerweise werden die Messwerte der Hall-Sensoren eines Messringes durch Mittelung der einzelnen Messwerte der Hall-Sensoren berechnet. Dabei kann die Mittelung auch gewichtet erfolgen.

Zur Auswertung der gemittelten Messwerte können Differenzen zwischen den gemittelten Messwerten berechnet werden und mit den Differenzen der gemittelten Messwerte der Schneidposition verglichen werden und aus diesen Differenzen die Verschiebungsmesswerte berechnet werden.

Die Erfindung wird anhand eines Ausführungsbeispiels in neun Figuren beschrieben. Dabei zeigen:
Fig. 1 eine perspektivische Ansicht einer Matrizenschneide, einer Magnetkupplung und eines Lagesensors mit einem eingefädelten Rohr, in dem ein fliegender Schneiddorn angeordnet ist,
Fig. 2 eine Schnittansicht der Anordnung in Fig. 1 entlang der Linie II - II in Fig. 1 mit einem Schnitt des in das Rohr eingebrachten Schneiddornes,
Fig. 3a eine Schnittansicht in Fig. 2 mit ausgelenkter, beweglicher Schneidmatrize und dem einen vom Rohr abgelängten Rohrabschnitt,
Fig. 3b eine Detailansicht in Fig. 3a mit der Darstellung der relativen Größe von einem Schneiddornspalt und einem Matrizenschneidspalt,
Fig. 4 eine Schnittansicht entlang der Linie IV - IV in Fig. 1 mit der Anordnung von sechs Hall-Sensoren am Sensorstator,
Fig. 5 eine Funktionsdarstellung des Lagesensors mit Sensorstator und Sensorläufer in der Schneidstellung mit eingezeichneten Magnetfeldlinien,
Fig. 6 eine Darstellung gemäß Fig. 5 mit nach links aus der Schneidstellung herausbewegtem Schneiddorn und zugehörigen Magnetfeldlinien,
Fig. 7 eine Darstellung gemäß Fig. 5 mit nach rechts aus der Schneidstellung herausbewegtem Schneiddorn mit zugehörigen Magnetfeldlinien,
Fig. 8 eine Graphik von Messwerten der drei in den Figuren 5, 6 und 7 dargestellten Sensorringen mit Hall-Sensoren bei Verschiebung nach links und rechts aus der Schneidposition des Schneiddorns.

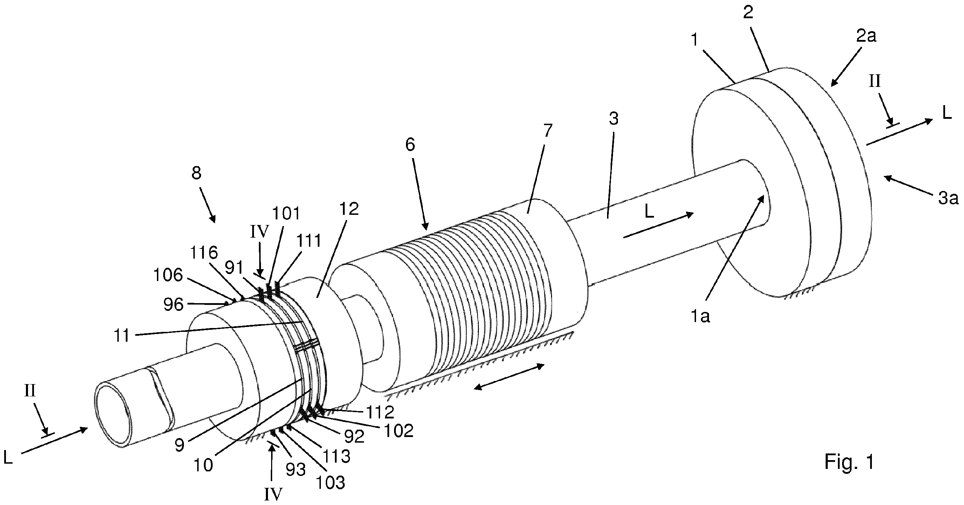

Fig. 1 zeigt einen Teil einer Rohrschneidemaschine. Der eigentliche Schneidvorgang wird bei der Rohrschneidemaschine durch eine Matrizenschneide mit zwei zusammenwirkenden Schneidmatrizen 1, 2 durchgeführt. Unter Schneiden wird hier auch ein Scheren verstanden. Die Matrizenschneide weist die feststehende Schneidmatrize 1 und die bewegliche Schneidmatrize 2 auf. Die feststehende Schneidmatrize 1 ist gegenüber einem nicht dargestellten Gestell oder Gehäuse der Schneidmaschine auch während des Schneidvorganges oder Schervorganges positionsfest angeordnet. Die bewegliche Schneidmatrize 2 ist gegenüber der feststehenden Schneidmatrize 1 parallel zu einer Schneidebene beweglich. Die bewegliche Schneidmatrize 2 wird von einem Exzenterantrieb, der ebenfalls nicht dargestellt ist, angetrieben und führt daher eine exzentrische Bewegung um eine Längsachse L eines in die feststehende Schneidmatrize 1 eingeführten Rohres 3 durch. Die exzentrische Bewegung führt zu einer größer werdenden spiralförmigen Schneidbewegung, mit der ein Rohrabschnitt 3a vom Rohr 3 abgeschert wird.

Darüber hinaus ist erfindungsgemäß eine Magnetkupplung 6 vorgesehen mit einem in Fig. 1 sichtbaren, außen um das Rohr gelegten Kupplungsstator 7, der mit einem in Fig. 1 noch nicht dargestellten, im Inneren angeordneten Kupplungsläufer, der Teil eines fliegenden Schneiddornes ist, zusammenwirkt.

In Fig. 1 ist auf der der Matrizenschneide gegenüberliegenden Seite von der Magnetkupplung 6 ein Lagesensor 8 angeordnet, durch den das Rohr 3 ebenfalls hindurchgefädelt ist. Das Rohr 3 wird vor dem Schneidvorgang zunächst durch den Lagesensor 8, dann durch die Magnetkupplung 6 und dann durch die beiden Schneidmatrizen 1, 2 durch dafür vorgesehene durchgehende Löcher 1a, 2a hindurchgeführt. In Fig. 1 ist der bereits eingefädelte Zustand dargestellt. An dem Lagesensor 8 sind drei Sensorringe 9, 10, 11 angeordnet. Jeder der Sensorringe 9, 10, 11 weist sechs Hall-Sensoren 91, 92, 93, 94, 95, 96, 101, 102, 103, 104, 105, 106, 111, 112, 113 114 115, 116 auf. Der Lagesensor 8 umfasst einen in Fig. 1 dargestellten, außen um das Rohr 3 angeordneten Sensorstator 12 sowie einen als Teil eines fliegenden Schneiddorns 13 ausgebildeten Sensorläufer 19.

Der Kupplungsstator 7 kann relativ zum Gestell der Rohrschneidemaschine positionsfest angeordnet sein. Er kann jedoch auch mittels eines Linearmotors hin und her verfahrbar ausgebildet sein. Im ersten Fall ist eine Steuerung vorgesehen, die es ermöglicht, vom Kupplungsstator 7 ausgebildete Magnetfelder in Längssrichtung L des Rohres 3, die einer axialen Richtung entspricht, hin und her zu verschieben. Im zweiten Fall übernimmt diese Verschiebung des Magnetfeldes der Linearmotor, der die Magnetfelder im Kupplungsstator 7 verschiebt. Die Verschiebung ist durch den Doppelpfeil dargestellt.

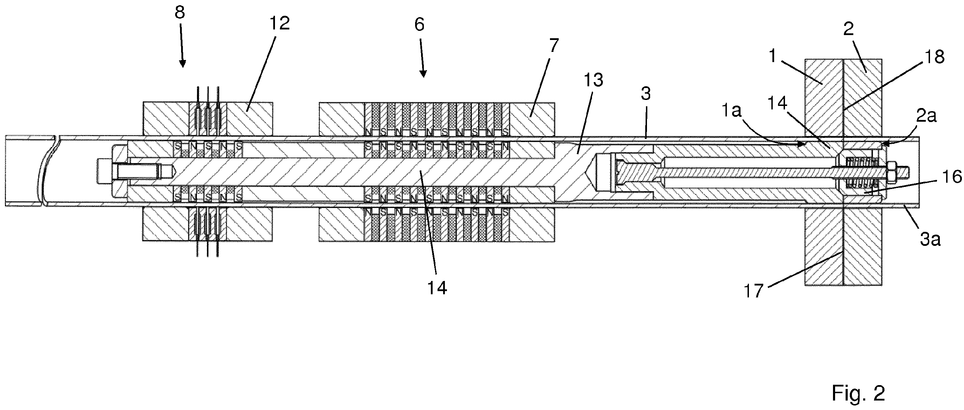

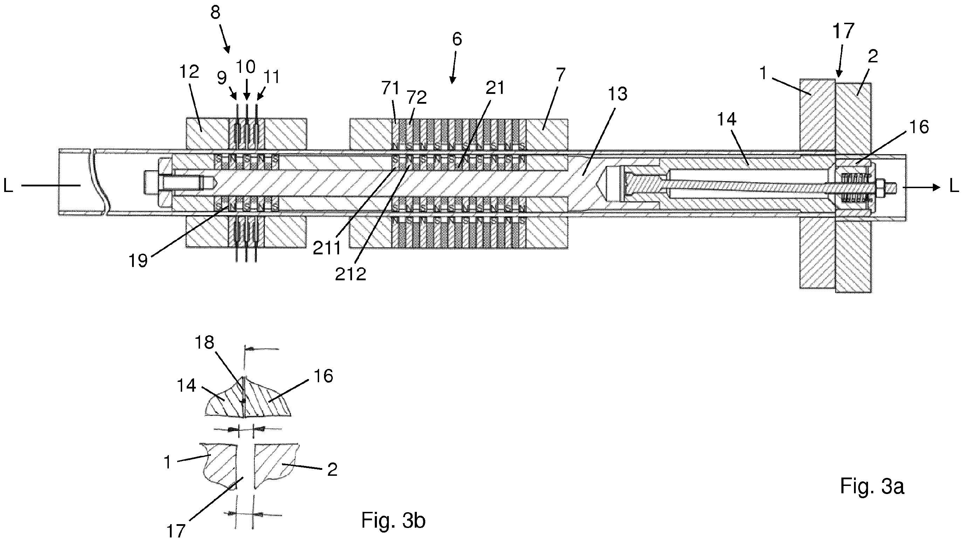

Fig. 2 zeigt die Schnittansicht der Fig. 1 entlang der Linie II-II. Beide Schneidmatrizen 1, 2 weisen jeweils das gleichgroße, zylindrische Loch 1a, 2a auf mit einem Innendurchmesser der einem Außendurchmesser des Rohres 3 entspricht, wobei die beiden Löcher 1a, 2a in Fig. 2 deckungsgleich angeordnet sind, so dass ein Ende des Rohres 3 durch beide Löcher 1a, 2a gleichzeitig durchgefädelt ist. In dem Rohr 3 ist der fliegende Schneiddorn 13 bereits in einer Schneidstellung angeordnet. Der fliegende Schneiddorn 13 ist weder an dem einen noch an dem anderen Ende des Rohres 3 nach außen herausgeführt, um ihn mit dem Gestell, einer Führungsstange oder anderweitigen Vorrichtungen der Rohrschneidemaschine zu verbinden. Der Schneiddorn 13 ist im Prinzip in Längsrichtung L des Rohres 3 frei hin und her beweglich. Der Schneiddorn 13 weist einen stationären Dorn 14 sowie einen beweglichen Dorn 16 auf. Der bewegliche Dorn 16 ist senkrecht zur Längsrichtung L gegenüber dem stationären Dorn 14 in alle Richtungen beweglich ausgebildet. Während des Schneidvorganges nimmt der beweglich Dorn 14 die Kräfte der beweglichen Schneidmatrize 2 an einer Wandungsinnenseite auf und führt sie durch das Innere des abzulängenden Rohrabschnitts 3a hindurch auf eine gegenüberliegende Wandungsinnenseite des abzulängenden Rohrabschnittes 3a, so dass bei einer Bewegung von oben nach unten der beweglichen Schneidmatrize 2, wie sie in der Fig. 3a dargestellt ist, der obere Bereich und der untere Bereich des Rohrabschnittes 3a von dem Rohr abgeschert werden. Die seitlichen Bereiche werden dabei zunächst etwas verformt. Durch eine exzentrische Bewegung der auslenkbaren Schneidmatrize 2 wird der gesamte Rohrabschnitt 3a vom Rohr 3 abgeschert. Fig.2 zeigt das Rohr 3 in der Schneidstellung in der der Matrizenspalt 17 und der Schneiddornspalt 18 direkt übereinander liegen. Mittelebenen der beiden Spalte 17, 18 fallen zusammen.

Fig. 3a zeigt den fliegenden Schneiddorn 13 in einem ausgelenkten Zustand während des Schervorganges. Der bewegliche Dorn 14 ist dabei nach unten ausgelenkt. Die Detailansicht in Fig. 3b zeigt, dass es zur Durchführung der Schneidbewegung bedeutend darauf ankommt, dass ein Matrizenspalt 17 zwischen der feststehenden Schneidmatrize 1 und der beweglichen Schneidmatrize 2, der etwa bei 0,2 mm +/- 0,05 mm liegt, das Rohr 3 umlaufend einen Bereich definiert, innerhalb dessen ein Schneiddornspalt 18 zwischen dem beweglichen Dorn 16 und dem Dorn 14 liegt. Der Schneiddornspalt beträgt hier etwa 0,01 mm +/-0,005 mm. Anderenfalls würden die Schneidmatrizen 1, 2 beim Abscheren beschädigt werden.

Die exakte Positionierung des fliegenden Schneiddornes 13 in dem Rohr 3 wird erfindungsgemäß durch den Lagesensor 8 in Verbindung mit der Magnetkupplung 6 erreicht.

Der Lagesensor 8 weist den außen um das Rohr gelegten Sensorstator 12 und den Sensorläufer 19 auf, der als ein Abschnitt des Schneiddornes 13 ausgebildet ist und der an dem dem beweglichen Dorn 16 gegenüberliegenden Ende des Schneiddornes 13 angeordnet ist. Grundsätzlich können jedoch Lagesensor 8 und Magnetkupplung 6 auch vertauscht am Schneiddorn 13 angeordnet sein.

Ebenso besteht die Magnetkupplung 6 aus dem Kupplungsstator 7, der verfahrbar gegenüber dem Gestell der Rohrschneidemaschine angeordnet sein kann, oder die Magnetfelder können mittels eines Linearmotors hin und her verfahrbar sein. Der Kuopplungsstator 7 wirkt mit einem Kupplungsläufer 21 zusammen, der ebenfalls einen Abschnitt des Schneiddornes 13 ausbildet.

In der Ausführungsform gemäß Fig. 3a ist die magnetische Kupplung durch zwei Reihen von Magneten ausgebildet. Der Kupplungsstator 7 weist eine erste Reihe hintereinander angeordnete Ringmagneten 71, 72 auf, die abwechselnd nach innen weisende Nord- und Südpole ausbilden. Der Kupplungsläufer 21 weist eine zweite Reihe von Magneten 211, 212 auf, die jedoch umgekehrt angeordnet sind, so dass sich ein Kupplungsverhalten einstellt und der Schneiddorn 13 durch die beiden Magnetreihen automatisch in die Schneidposition gezogen wird, in der die Magneten der beiden Magnetreihen den geringsten Abstand zueinander annehmen. Die Magnetkupplung 6 eignet sich somit in erster Linie zum Schneiden nichtferromagnetischer Rohre, die vollständig aus Edelstahl, Messing, Kupfer und Titan oder Mischungen daraus bestehen; grundsätzlich könnten auch ferromagnetische Rohre 3 geschnitten werden, wenn die Magneten hinreichend stark genug sind.

Die Position der Magnetkupplung 6, also des Kupplungsstators 7, im Abstand zur Matrizenschneide 1 wird im Hinblick auf die Abmessungen des Schneiddornes 13 eingestellt. Im Laufe mehrerer aufeinanderfolgender Schneidvorgänge kann es bereits durch Temperatureinflüsse, die auf die Maschine wirken und die Längenänderungen im Bereich der in Fig. 3b dargestellten Abmessungen von Zehntelmillimetern bewirken können, zu geringfügigen Verschiebungen kommen, die aber den Schervorgang behindern oder sogar verhindern. Um z. B. Längenveränderungen nachzujustieren, wird die Position des fliegenden Dornes 13 gegenüber der feststehenden Schneidmatrize 1, insbesondere des Schneiddornspaltes 18 gegenüber dem Matrizenspalt 17 ständig oder regelmäßig mit Hilfe des Lagesensors 8 kontrolliert.

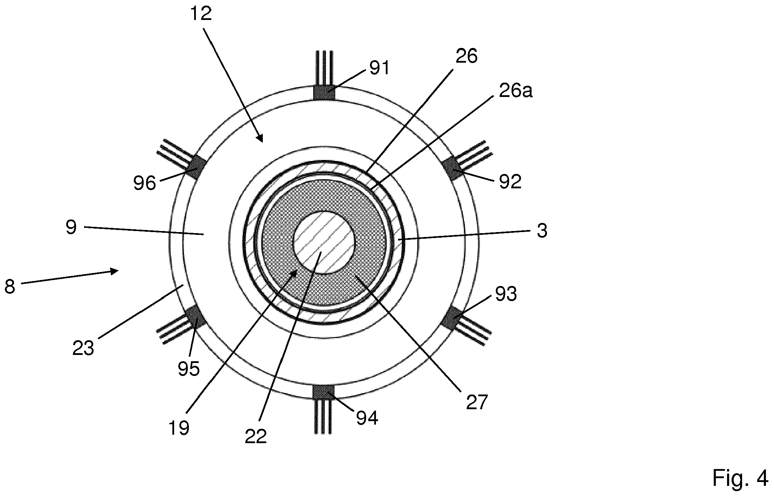

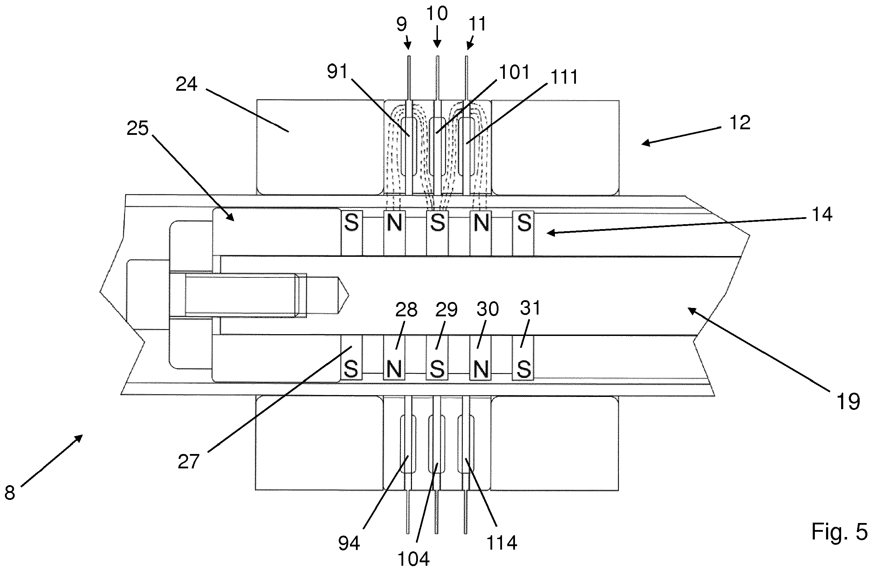

Der Lagesensor 8 in Fig. 3a weist die drei Sensorringe 9, 10, 11 mit den jeweils sechs Hall-Sensoren 91, 92, 93, 94, 95, 96, 101, 102, 103, 104, 105, 106, 111, 112, 113 114 115, 116 auf, wie sie in der Schnittdarstellung in Fig. 4, dargestellt am ersten Sensorring 9, dargestellt sind. Die anderen Sensorringe 10, 11 sind baugleich zum ersten Sensorring 9. Es ist auch denkbar, dass jeder der Sensorringe 9, 10, 11 zwei oder vier oder auch eine höhere Anzahl an Hall-Sensoren 91, 92, 93, 94, 95, 96, 101, 102, 103, 104, 105, 106, 111, 112, 113 114 115, 116 aufweist. Es sind jedoch mindestens zwei erforderlich, die dann jeweils um 180° versetzt angeordnet werden. Im Ausführungsbeispiel sind die sechs Hall-Sensoren 91, 92, 93, 94, 95, 96, die um jeweils 60° versetzt angeordnet sind, dargestellt. Die sechs Hall-Sensoren 91, 92, 93, 94, 95, 96 des ersten Sensorringes 9 sind in einen umlaufenden Eisenring 23 eingelassen, die Sensorringe 9, 10, 11 sind in einer Führungshülse 24 gemäß Fig. 5 geführt. Die Führungshülse 24 weist eine zylindrische Öffnung 25 auf, die dem Rohraußendurchmesser entspricht und durch die das Rohr 3 hindurchgefädelt ist.

Zwischen der Rohraußenwandung und der Führungshülse 24 des Sensorstators 12 ist ein kleines Spiel 26 von der Größe eines Bruchteils eines Millimeters vorgesehen, damit das Rohr 3 auch durch die zylindrische Öffnung 25 des Sensorstators 12 gefädelt werden kann. Des Weiteren ist ein ebenso kleines Spiel 26a zwischen Rohr 3 und Permanentmagnetring 27 vorgesehen. Im Inneren des Rohres 3 ist der Sensorläufer 19 vorgesehen. In Fig. 4 ist im Schnitt ein Permanentmagnetring 27 gezeigt, der außen einen Nordpol darstellt. Der Permanentmagnetring 27 ist auf eine nichtmagnetische, d. h. paramagnetische oder diamagnetische Haltestange 22 gefädelt. Ein Außendurchmesser des Permanentmagnetringes 27 entspricht dem Innendurchmesser des Rohres 3 abzüglich ebenfalls eines kleinen Spiels von einem Bruchteil eines Millimeters.

Fig. 5 zeigt fünf Permanentmagnetringe 27, 28, 29, 30, 31 gemäß Fig. 4. Das Zusammenwirken der Permanentmagnetringe 27, 28, 29, 30, 31 des Sensorläufers 19 und der Hall-Sensoren 91, 92, 93, 94, 95, 96, 101, 102, 103, 104, 105, 106, 111, 112, 113 114 115, 116 des Sensorstators 12 ist in den Fig. 5, 6 und 7 mit zugehörigen Magnetfeldlinien dargestellt. Jeder der Hall-Sensoren 91, 92, 93, 94, 95, 96, 101, 102, 103, 104, 105, 106, 111, 112, 113 114 115, 116 misst die Magnetfeldstärke am radial äußeren Ende des ihnen zugeordneten Sensorringes 9, 10, 11, also an der Stelle, an der die Hall-Sensoren 91, 92, 93, 94, 95, 96, 101, 102, 103, 104, 105, 106, 111, 112, 113 114 115, 116 gemäß Fig. 4 angeordnet sind.

Fig. 5 zeigt die Ausbildung der Magnetfeldlinien in der Schneidstellung, das ist die Stellung, wenn gemäß Fig. 2 und Fig. 3b der Schneiddornspalt 18 vollständig innerhalb des Matrizenschneidspaltes 17 angeordnet ist. Es ist zu erkennen, dass der Sensor 101 kein Signal empfängt, während die Sensoren 91 und 111 ein relativ starkes Signal empfangen.

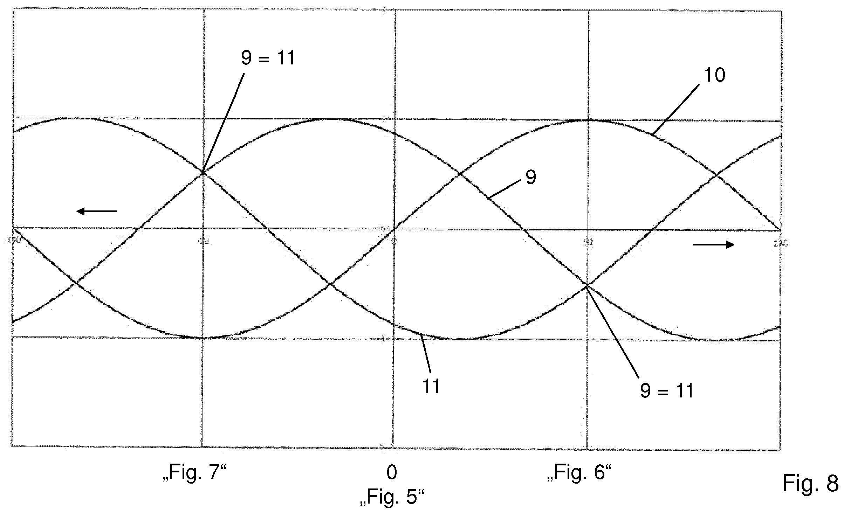

Die zugehörigen Messwerte sind in der Fig. 8 auf der Nulllinie dargestellt. Tatsächlich ist es so, dass nicht die Messwerte eines einzelnen Hall-Sensors in Fig. 8 aufgetragen sind und einer Steuereinheit zugeführt werden. Da die Permanentmagnetringe 27, 28, 29, 30, 31 des Sensorläufers 19 durch das Spiel auch senkrecht zur Längsrichtung L beweglich sind und die Hall-Sensoren 91, 92, 93, 94, 95, 96, 101, 102, 103, 104, 105, 106, 111, 112, 113 114 115, 116 extrem empfindlich auf Magentfeldstärkenänderungen reagieren, wird günstigerweise ein gewichteter oder einfacher, nicht gewichteter Mittelwert der Hall-Sensoren 91, 92, 93, 94, 95, 96, 101, 102, 103, 104, 105, 106, 111, 112, 113 114 115, 116 eines Sensorringes 9, 10, 11 gebildet. Es können grundsätzlich auch andere Verrechnungen der Messwerte der einzelnen Hall-Sensoren 91, 92, 93, 94, 95, 96, 101, 102, 103, 104, 105, 106, 111, 112, 113 114 115, 116 eines Sensorringes 9, 10, 11 vorgenommen werden. Es scheinen sich jedoch Mittelwerte bzw. gewichtete Mittelwerte als besonders günstig zu eignen. Diese gewichteten Mittelwerte werden dann als Messwert gemäß der Fig. 8 der Steuereinheit zugeführt.

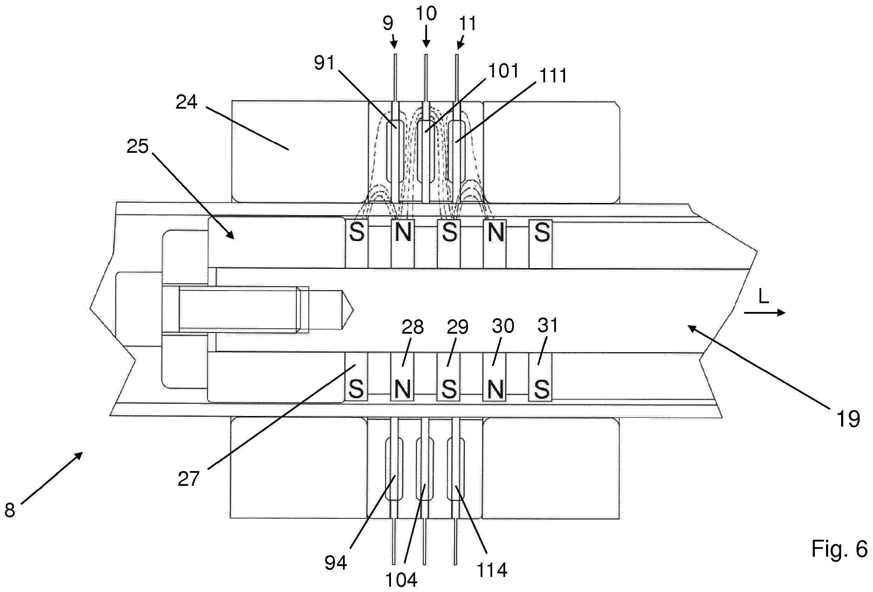

Fig. 6 zeigt die Magnetfeldlinien bei einer Verschiebung des fliegenden Schneiddornes 13 in Richtung der Schneidmatrize 1. Durch die Verschiebung der Permanentmagnetringe 27, 28, 29, 30, 31 entsteht ein starkes Magnetfeld am Sensorring 10, während die Magnetfelder an den Hall-Sensoren 91, 92, 93, 94, 95, 96, 111, 112, 113 114 115, 116 der Sensorringe 9 und 11 abnehmen. Dieses ist in der Fig. 8 in der Position "Fig. 6" dargestellt, die der Position der Fig. 6 entspricht.

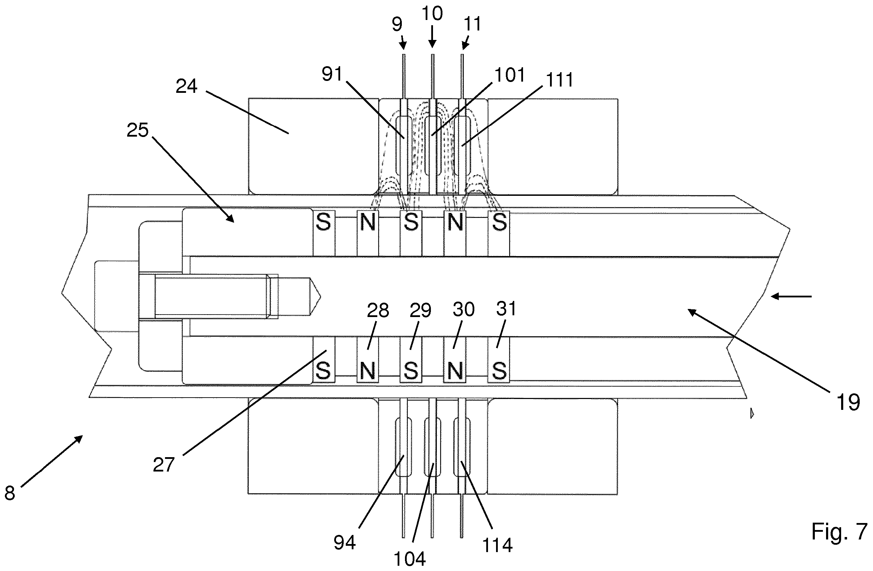

Dementsprechend ist in der Fig. 7, die der Position "Fig. 7" in der Fig. 8 entspricht, der Schneiddorn13 von der Schneidmatrize 1 wegverschoben. Auch hier erhält der Sensorring 10 ein maximales Messsignal, jedoch in genau der entgegengesetzten Richtung, da die Feldlinien gegenüber der Fig. 6 ihre Richtung umgekehrt haben, während die Sensorringe 9 und 11 wiederum ein schwaches Signal, ebenfalls in entgegengesetzter Richtung, erfahren. Die Messwerte sind ebenfalls dargestellt. Bei einer kontinuierlichen Bewegung würden die drei Sensorringe 9, 10, 11 einen Messwerteverlauf in sinusförmiger Form ergeben, wie er in der Fig. 8 dargestellt ist.

Aus dem Abstand der Messwerte gemäß Fig. 8 zueinander bei den Positionen "Fig. 6" und "Fig. 7" im Vergleich zur Stellung der Messwerte in der Schneidstellung, also der Nullstellung in Fig. 8, kann errechnet werden, um welche Distanz sich der Schneiddorn 13 gegenüber dem Sensorstator 12 bewegt hat und damit aus der Schneidstellung herausbewegt wurde. Um diese Distanz zu korrigieren, werden die entsprechenden Messwerte in Steuerwerte durch die nicht dargestellte Steuereinheit umgewandelt und der Magnetkupplung 6 zugeführt. Die Magnetkupplung 6 verfährt dann den Kupplungsstator 7 entsprechend zur Schneidmatrize 1 hin oder zurück, um genau diese gemessene Distanz zu kompensieren. Alternativ wird ein im Kupplungsstator 7 erzeugtes Magnetfeld axial hin oder her verschoben.

### Bezugszeichenliste

- 1: feststehende Schneidmatrize
- 1a: Loch
- 2: bewegliche Schneidmatrize
- 2a: Loch
- 3: Rohr
- 3a: Rohrabschnitt
- 6: Magnetkupplung
- 7: Kupplungsstator
- 8: Lagesensor
- 9: Sensorring

- 10: Sensorring
- 11: Sensorring
- 12: Sensorstator
- 13: fliegender Schneiddorn
- 14: stationärer Dorn

- 16: beweglicher Dorn
- 17: Matrizenspalt
- 18: Schneiddornspalt
- 19: Sensorläufer

- 21: Kupplungsläufer
- 22: Haltestange
- 23: Eisenring
- 24: Führungshülse
- 25: zylindrische Öffnung
- 26: Spiel
- 26a: Spiel
- 27: Permanentmagnetring
- 28: Permanentmagnetring
- 29: Permanentmagnetring

- 30: Permanentmagnetring
- 31: Permanentmagnetring
- 71: Ringmagnet
- 72: Ringmagnet

- 91: Hall-Sensor
- 92: Hall-Sensor
- 93: Hall-Sensor
- 94: Hall-Sensor
- 95: Hall-Sensor
- 96: Hall-Sensor

- 101: Hall-Sensor
- 102: Hall-Sensor
- 103: Hall-Sensor
- 104: Hall-Sensor
- 105: Hall-Sensor
- 106: Hall-Sensor

- 111: Hall-Sensor
- 112: Hall-Sensor
- 113: Hall-Sensor
- 114: Hall-Sensor
- 115: Hall-Sensor
- 116: Hall-Sensor

- 211: Ringmagnet
- 212: Ringmagnet

- L: Längsrichtung

## Patentansprüche

1. Rohrschneidemaschine mit einem Rohr (3) mit einer Längsrichtung (L), von dem ein
Rohrabschnitt (3a) abgelängt werden soll, und mit einer feststehenden Schneidmatrize (1) und einer der feststehenden Schneidmatrize (1) gegenüber beweglichen Schneidmatrize (2) und einem Schneiddorn (13), der in das Rohr (3) eingebracht ist, mit einem stationären Dorn (14) und einem dem stationären Dorn (14) gegenüber beweglichen Dorn (16), wobei der Schneiddorn (13) während des Schneidvorganges in einer Schneidposition angeordnet ist,
**dadurch gekennzeichnet, dass**
der Schneiddorn (13) fliegend im Rohr (3) angeordnet ist und
eine Magnetkupplung (6) mit einem außerhalb des Rohres (3) angeordneten Kupplungsstator (7) und einem am stationären Dorn (14) angeordneten Kupplungsläufer (21) vorgesehen ist und eine Verschiebung eines Magnetfeldes der Magnetkupplung (6) in einer Längsrichtung (L) durch Steuerwerte steuerbar ist und
ein Lagesensor (8) einen mit einem Gestell positionsfest verbundenen Sensorstator (12) und einen mit dem stationären Dorn (14) positionsfest verbundenen Sensorläufer (19) aufweist, mit dem Abweichungen des Schneiddornes (13) aus der Schneidstellung messbar sind, und eine Steuereinheit Abweichungsmesswerte in die Steuerwerte umwandelt, durch die der Schneiddorn (13) in die Schneidstellung zurückbewegbar ist.

2. Rohrschneidemaschine nach Anspruch1,
**gekennzeichnet durch** einen Exzenterantrieb für die bewegliche Schneidmatrize (2).

3. Rohrschneidemaschine nach Anspruch 1 oder 2,
**dadurch gekennzeichnet, dass** der Sensorläufer (19) wenigstens zwei in Längsrichtung (L) voneinander beabstandete Magnetpole aufweist und der Sensorstator (12) wenigstens zwei Sensorringe (9, 10, 11) mit jeweils wenigstens zwei Hall-Sensoren (91, 92, 93, 94, 95, 96, 101, 102, 103, 104, 105, 106, 111, 112, 113 114 115, 116) aufweist.

4. Rohrschneidemaschine nach Anspruch 3
**dadurch gekennzeichnet, dass** die Hall-Sensoren (91, 92, 93, 94, 95, 96, 101, 102, 103, 104, 105, 106, 111, 112, 113 114 115, 116) mit der Steuereinheit verbunden sind, die Messwerten der Hall-Sensoren (91, 92, 93, 94, 95, 96, 101, 102, 103, 104, 105, 106, 111, 112, 113 114 115, 116) jeder der Sensorringe (9, 10, 11) jeweils einen Sensorringmesswert zuordnet und aus einer Veränderung von Sensorringmesswertdifferenzen eine Abweichung des Schneiddornes (13) aus einer Schneidlage berechnet und die Abweichungsmesswerte erzeugt.

5. Verfahren zum Ablängen von Rohrabschnitten (3a) von einem Rohr (3) mit einer Längsrichtung (L), indem
ein fliegender Schneiddorn (13) in das Rohr (3) eingeführt wird,
das Rohr (3) in eine Matrizenschneide (1, 2) mit einem Matrizenspalt (17) eingeführt wird, bis eine Schnittfläche zwischen dem Rohrabschnitt (3a) und dem Rohr (3) in Verlängerung des Matrizenspaltes (17) angeordnet ist,
der fliegende Schneiddorn (13) in einer Längsrichtung (L) ausgerichtet in eine Schneidposition verschoben wird, in der ein Schneiddornspalt (18) in der Verlängerung des Matrizenspaltes (17) angeordnet wird, **dadurch gekennzeichnet, dass** ein Lagesensor (8) Abweichungen des Schneiddornes (13) von einer Schneidposition misst, einer Steuereinheit zuführt, die Abweichungsmesswerte in Steuerwerte umwandelt und einer Magnetkupplung (6) zuführt, die den Schneiddorn (13) in seine Schneidposition zurückbewegt.

6. Verfahren nach Anspruch 5,
**dadurch gekennzeichnet, dass** Messwerte von entlang eines Sensorringes (9, 10, 11) angeordneter Hall-Sensoren (91, 92, 93, 94, 95, 96, 101, 102, 103, 104, 105, 106, 111, 112, 113 114 115, 116) gemessen werden und zu einem Sensorringmesswert verrechnet werden und die Sensorringmesswerte wenigstens zweier Sensorringe (9, 10. 11) ermittelt werden und mit Sensorringmesswerten der Nullstellung verglichen werden und aus dem Vergleich Abweichungsmesswerte berechnet werden.

7. Verfahren nach Anspruch 6,
**dadurch gekennzeichnet, dass** die Messwerte der Hall-Sensoren (91, 92, 93, 94, 95, 96, 101, 102, 103, 104, 105, 106, 111, 112, 113 114 115, 116) des Sensorringes (9, 10,11) gemittelt werden.

8. Verfahren nach Anspruch 6 oder 7, **dadurch gekennzeichnet, dass** Differenzen der gemittelten Messwerte berechnet werden und mit Differenzen der gemittelten Messwerte der Schneidposition verglichen werden.

## Claims

1. Pipe cutting machine with a pipe (3), with a longitudinal direction (L), from which a pipe section (3a) is to be cut to size, a stationary cutting die (1), a movable cutting die (2) which can be moved relative to the stationary cutting die (1), and a cutting mandrel (13) which is introduced into the pipe (3) and which comprises a stationary mandrel (14) and a mandrel (16) that can be moved relative to the stationary mandrel (14), wherein the cutting mandrel (13) is arranged in a cutting position in a floating manner, **characterised in that**
the cutting mandrel (13) is arranged in the pipe (3) in a floating manner, and
a magnetic coupling (6) is provided with a coupling stator (7) arranged outside of the pipe (3) and a coupling rotor (21) arranged on the stationary mandrel (14), and a movement of a magnetic field of the magnetic coupling (6) in a longitudinal direction (L) can be controlled using control values, and
a position sensor (8) has a sensor stator (12), which is connected to a frame in a fixed position, and a sensor rotor (19), which is connected to the stationary mandrel (14) in a fixed position, said position sensor being used to measure deviations of the cutting mandrel (13) from the cutting position, and a control unit converts deviation measurement values into the control values, by means of which the cutting mandrel (13) can be returned to the cutting position.

2. Pipe cutting machine according to claim 1,
**characterised by** an eccentric drive for the movable cutting die (2).

3. Pipe cutting machine according to claim 1 or 2,
**characterised in that** the sensor rotor (19) has at least two magnetic poles spaced apart from one another in the longitudinal direction (L) and the sensor stator (12) has at least two sensor rings (9, 10, 11) each having at least two Hall effect sensors (91, 92, 93, 94, 95, 96, 101, 102, 103, 104, 105, 106, 111, 112, 113 114 115, 116).

4. Pipe cutting machine according to claim 3,
**characterised in that** the Hall effect sensors (91, 92, 93, 94, 95, 96, 101, 102, 103, 104, 105, 106, 111, 112, 113, 114, 115, 116) are connected to the control unit, the measurement values of the Hall effect sensors (91, 92, 93, 94, 95, 96, 101, 102, 103, 104, 105, 106, 111, 112, 113 114 115, 116) of each of the sensor rings (9, 10, 11) are in each case assigned a sensor ring measurement value, and from a change to sensor ring measurement value differences a deviation of the cutting mandrel (13) from the cutting position is calculated and the deviation measurement values are generated.

5. Method for cutting pipe sections (3a) of a pipe (3), with a longitudinal direction (L), to size, wherein a floating cutting mandrel (13) is introduced into the pipe (3),
the pipe (3) is introduced into a die cutter (1, 2) having a die gap (17) until a cutting surface between the pipe section (3a) and the pipe (3) is arranged in an extension of the die gap (17),
the floating cutting mandrel (13) is oriented in the longitudinal direction (L) and moved into a cutting position in which a cutting mandrel gap (18) is arranged in the extension of the die gap (17), **characterised in that** a position sensor (8) measures deviations of the cutting mandrel (13) from a cutting position and feeds them to a control unit, converts the deviation measurement values into control values and feeds them to a magnetic coupling (6), which moves the cutting mandrel (13) back into its cutting position.

6. Method according to claim 5,
**characterised in that** measurement values of Hall effect sensors (91, 92, 93, 94, 95, 96, 101, 102, 103, 104, 105, 106, 111, 112, 113, 114, 115, 116) arranged along a sensor ring (9, 10, 11) are measured and processed to produce a sensor ring measurement value, and the sensor ring measurement values of at least two sensor rings (9, 10, 11) are determined and are compared with sensor ring measurement values of the zero position, and deviation measurement values are calculated from the comparison.

7. Method according to claim 6,
**characterised in that** the measurement values of the Hall effect sensors (91, 92, 93, 94, 95, 96, 101, 102, 103, 104, 105, 106, 111, 112, 113 114 115, 116) of the sensor ring (9, 10, 11) are averaged.

8. Method according to claim 6 or 7,
**characterised in that** differences between the averaged measurement values are calculated and compared with the differences of the averaged measurement values of the cutting position.

## Revendications

1. Machine à couper des tuyaux avec un tuyau (3) avec un sens longitudinal (L) à partir duquel un tronçon de tuyau (3a) doit être coupé et avec une matrice de coupe fixe (1) et une matrice de coupe (2) mobile par rapport à la matrice de coupe fixe (1) et avec un mandrin de coupe (13) qui est inséré dans le tuyau (3), avec un mandrin stationnaire (14) et un mandrin mobile (16) par rapport au mandrin stationnaire (14), le mandrin de coupe (13) étant placé dans une position de coupe pendant l'opération de coupe, **caractérisée en ce que**
le mandrin de coupe (13) est placé en porte-à-faux dans le tuyau (3) et un accouplement magnétique (6) est prévu avec un stator d'accouplement (7) placé à l'extérieur du tuyau (3) et un rotor d'accouplement (21) placé sur le mandrin stationnaire (14) et un déplacement d'un champ magnétique de l'accouplement magnétique (6) dans un sens longitudinal (L) peut être commandé par des valeurs de commande et un détecteur de position (8) présente un stator de détecteur (12) relié fixe en position à un châssis et un rotor de détecteur (19) relié fixe en position au mandrin stationnaire (14) avec lequel des déviations du mandrin de coupe (13) par rapport à la position de coupe peuvent être mesurées et une unité de commande transforme des valeurs mesurées de déviation en valeurs de commande par lesquelles le mandrin de coupe (13) peut être ramené à la position de coupe.

2. Machine à couper des tuyaux selon la revendication 1, **caractérisée par** un entraînement à excentrique pour la matrice de coupe mobile (2).

3. Machine à couper des tuyaux selon la revendication 1 ou 2, **caractérisée en ce que** le rotor de détecteur (19) présente au moins deux pôles magnétiques espacés l'un de l'autre dans le sens longitudinal (L) et le stator de détecteur (12) présente au moins deux anneaux de détection (9, 10, 11) avec chacun au moins deux capteurs de Hall (91, 92, 93, 94, 95, 96, 101, 102, 103, 104, 105, 106, 111, 112, 113, 114, 115, 116).

4. Machine à couper des tuyaux selon la revendication 3, **caractérisée en ce que** les capteurs de Hall (91, 92, 93, 94, 95, 96, 101, 102, 103, 104, 105, 106, 111, 112, 113, 114, 115, 116) sont reliés à l'unité de commande, les valeurs mesurées des capteurs de Hall (91, 92, 93, 94, 95, 96, 101, 102, 103, 104, 105, 106, 111, 112, 113, 114, 115, 116) de chacun des anneaux de détection (9, 10, 11) sont associées chacune à une valeur mesurée d'anneau de détection et à partir d'une modification des différences de valeurs mesurées d'anneau de détection il est calculé une déviation du mandrin de coupe (13) par rapport à une position de coupe et les valeurs mesurées de déviation sont produites.

5. Procédé pour découper des tronçons de tuyau (31) d'un tuyau (3) avec un sens longitudinal (L),
un mandrin de coupe en porte-à-faux (13) étant inséré dans le tuyau (3),
le tuyau (3) étant introduit dans une lame de matrice (1, 2) avec une fente de matrice (17) jusqu'à ce qu'une surface de coupe soit placée entre le tronçon de tuyau (3a) et le tuyau (3) dans le prolongement de la fente de matrice (17),
le mandrin de coupe en porte-à-faux orienté dans un sens longitudinal (L) est poussé dans une position de coupe dans laquelle une fente de mandrin de coupe (18) est placée dans le prolongement de la fente de matrice (17),
**caractérisé en ce qu'**un détecteur de position (8) mesure des déviations du mandrin de coupe (13) par rapport à une position de coupe, les amène à une unité de commande, transforme les valeurs mesurées de déviations en valeurs de commande et les amène à un accouplement magnétique (6) qui ramène le mandrin de coupe (13) dans sa position de coupe.

6. Procédé selon la revendication 5, **caractérisé en ce que** des valeurs mesurées de capteurs de Hall (91, 92, 93, 94, 95, 96, 101, 102, 103, 104, 105, 106, 111, 112, 113, 114, 115, 116) placés le long d'un anneau de détection (9, 10, 11) sont mesurées et sont calculées en une valeur mesurée d'anneau de détection et les valeurs mesurées d'anneau de détection d'au moins deux anneaux de détection (9, 10, 11) sont déterminées et comparées à des valeurs mesurées d'anneau de détection de la position zéro et des valeurs mesurées de déviation sont calculées à partir de la comparaison.

7. Procédé selon la revendication 6, **caractérisé en ce que** la moyenne des valeurs mesurées des capteurs de Hall (91, 92, 93, 94, 95, 96, 101, 102, 103, 104, 105, 106, 111, 112, 113, 114, 115, 116) de l'anneau de détection (9, 10, 11) est établie.

8. Procédé selon la revendication 6 ou 7, **caractérisé en ce que** des différences de des valeurs moyennes mesurées sont calculées et comparées aux différences des valeurs moyennes mesurées de la position de coupe.
